(19) Europäisches Patentamt / European Patent Office / Office européen des brevets

(11) **EP 4 388 863 A1**

(12) **EUROPEAN PATENT APPLICATION**

(43) Date of publication:
**26.06.2024 Bulletin 2024/26**

(21) Application number: **23218819.3**

(22) Date of filing: **20.12.2023**

(51) International Patent Classification (IPC):
**A01F 15/07** (2006.01)    **A01F 15/08** (2006.01)
**F16H 7/08** (2006.01)    **F16H 61/12** (2010.01)

(52) Cooperative Patent Classification (CPC):
**A01F 15/085; A01F 15/07; F16H 7/08; F16H 57/01;**
F16H 2007/0806; F16H 2007/087;
F16H 2007/0893; F16H 2007/0897

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.12.2022 IE S20220206**

(71) Applicant: **McHale Engineering Unlimited Company**
**Ballinrobe, County Mayo (IE)**

(72) Inventors:
 • **McHale, Padraic, Christopher**
  **Tumneenane, Clonbur, County Galway, (IE)**

 • **McHale, Martin, William**
  **Kilmaine Village, Kilmaine, County Mayo,, (IE)**
 • **McHale, Paul, Gerard**
  **13 Riverside, Woodquay, Galway,, (IE)**
 • **Biggins, John, Patrick**
  **30 Hillcrest, Claremorris, County Mayo,, (IE)**
 • **Warren, John, Alexander**
  **Coolylaughnan, Hollymount, County Mayo,, (IE)**
 • **Shanahan, Conor, Paul**
  **Claggan, Ballycroy, Westport, County Mayo,, (IE)**

(74) Representative: **Gorman, Francis Fergus**
**F. F. Gorman & Co.**
**15 Clanwilliam Square**
**Dublin 2 (IE)**

(54) **A BALER AND A METHOD FOR DETERMINING THE DEGREE OF WEAR IN A DRIVE TRANSMISSION SYSTEM OF THE BALER**

(57) A fixed chamber baler (2) comprises a method for determining the degree of wear in a main drive chain (53) of a drive transmission system (49) for transmitting drive from a gearbox (40) to sprockets (60, 72) of bale rotating rollers (17) of a bale chamber (10) of the baler (2). The drive transmission system (49) comprises a driving sprocket (50) mounted fast on a first output shaft (44) of the gearbox (40) which transmits drive through a main drive chain (53) to first and second driven sprockets (52, 54). A tensioning unit (79) comprising a carrier arm (83) pivotal about a main pivot axis (89) rotatably carries a tensioning sprocket (80) and is urged into engagement with a stack leg (84) of the main drive chain (53) by a tension spring (95). The degree of wear in the main drive chain (53) is proportional to the degree of stretch in the drive chain (53). An angle sensor (105) coupled to the carrier arm (83) by a linkage (107) monitors the angular displacement of the carrier arm (83) about the main pivot axis (89) from a datum position and produces signals indicative of the angular displacement of the carrier arm (83) from the datum position thereof. A look-up table is stored in the memory of a microcontroller comprising a plurality of values of the signal produced by the angle sensor (105) cross-referenced with corresponding degrees of stretch of the main drive chain (53), from which the degree of stretch of the main drive chain (53) is determined.

FIG. 10

EP 4 388 863 A1

## Description

The present invention relates to a baler, and in particular, though not limited to a baler for producing cylindrical bales of material, for example, crop material, such as silage, hay, straw and the like, although the baler may also be used for baling other materials, for example, waste material and the like. The invention also relates to a method for determining the degree of wear in a drive transmission system of such a baler.

Balers for forming cylindrical bales of material, for example, crop material, such as silage, hay, straw and the like as well as animal bedding are known. Such cylindrical bales, are commonly referred to as round or large round bales, and typically, are of a diameter in the range of 500mm to 2,000mm and of axial length commonly in the range of 1,100mm to 1,300mm. More typically, the diameter of such large round bales lies in the range of 700mm to 1,300mm, while the axial length of such large round bales more typically, lies in the range of 1,200mm to 1,250mm.

Such balers, can be broadly categorised into two broad categories, namely, roller balers and belt balers. Roller balers are commonly referred to as fixed chamber balers, and in general, comprise a series of parallel bale rotating rollers arranged circumferentially around and defining a bale chamber of substantially fixed diameter, within which material to be baled is rotated, pressed and formed into a bale. Belt balers, on the other hand comprise one or more belts which are carried on rollers, some of which are tensioning rollers to apply tension to the belt or belts, and one or more of the rollers are driven rollers. The rollers and the belt or belts are arranged to define a variable diameter bale chamber, which increases in diameter as the bale is being formed therein. The driven rollers urge the belt or belts past the bale chamber to rotate, press and form the material therein into a round bale. Such balers will be well known to those skilled in the art.

Such balers, in general, are towed by a prime mover, typically by a tractor, and are mechanically powered by the tractor, and are also hydraulically powered from the hydraulic system of the tractor. Mechanical power from the tractor towing the baler is transmitted from the power take-off shaft of the tractor through a cardan shaft to a gearbox typically mounted forwardly on the chassis of the baler. A drive transmission system is provided in the baler for transmitting drive from the gearbox to the bale rotating rollers of a roller baler and to the belt driving rollers of a belt baler. Typically, a driving sprocket is mounted fast on an output shaft of the gearbox, and drive from the driving sprocket is transmitted to one or more driven sprockets through a main drive chain. A tensioning unit is provided which cooperates with the main drive chain for tensioning thereof. Typically, the tensioning unit comprises a tensioning sprocket which is rotatably carried on a pivotally mounted carrier arm and is urged into engagement with the main drive chain for tensioning thereof.

The main drive chain of such drive transmission systems of balers is subjected to significant tension forces, particularly, as the formation of a bale in the bale chamber of a roller baler is nearing completion, when the pressure being applied to the bale in the bale chamber is at its maximum. This, can result in wear occurring in the main drive chain, which if not replaced at appropriate intervals will break. This in turn results in unnecessary downtime of the baler during a baling session. This problem, as well as arising in roller balers, also arises in belt balers and balers which comprise a combination of bale rotating rollers and one or more belts.

There is therefore a need for a baler which addresses this problem, and there is also a need for a method for determining the degree of wear in a drive transmission system of a baler.

The present invention is directed towards providing such a baler, and such a method for determining the degree of wear in a drive transmission system of a baler.

According to the invention there is provided a method for determining the degree of wear in a drive transmission system of a baler, the drive transmission system comprising a rotatably mounted driving element adapted to receive drive transmitted from a power source, a rotatably mounted driven element adapted to transmit drive to an operating part of the baler, an endless drive transmission element cooperating with the driving element and the driven element for transmitting drive from the driving element to the driven element, and a tensioning means pivotally mounted about a pivot mounting and urgeable into engagement with the endless drive transmission element for tensioning thereof, wherein the method comprises monitoring a value of a characteristic indicative of the angular displacement of the tensioning means about the pivot mounting from a datum position, and determining the degree of wear in the endless drive transmission element as a function of the monitored value of the characteristic indicative of the angular displacement of the tensioning means about the pivot mounting from the datum position.

In one embodiment of the invention the degree of wear in the endless drive transmission element is determined from a look-up table comprising a plurality of values of the characteristic indicative of the angular displacement of the tensioning means from the datum position cross-referenced with corresponding values of the degree of wear in the endless drive transmission element by selecting the value of the degree of wear in the endless drive transmission element from the look-up table which corresponds to or is closest to the monitored value of the characteristic indicative of the angular displacement of the tensioning means from the datum position in the look-up table as the value of the degree of wear in the endless drive transmission element.

In another embodiment of the invention if the monitored value of the characteristic indicative of the angular displacement of the tensioning means from the datum position falls between two consecutive values of the characteristic indicative of the angular displacement of the tensioning means from the datum position in the look-up table, the value of the ratio of the monitored value of the characteristic indicative of the angular displacement of the tensioning means from the datum position to one of the lower value or the upper value of the two consecutive values of the characteristic indicative of the angular displacement of the tensioning means from the datum position in the look-up table is determined and is applied to the value of the corresponding one of the lower value or upper value of the two consecutive values of the degree of wear of the endless drive transmission element in the look-up table corresponding to the two consecutive values of the characteristic indicative of the angular displacement of the tensioning means from the datum position in the look-up table to determine the value of the degree of wear in the endless drive transmission element.

In an alternative embodiment of the invention an equation indicative of the relationship between the characteristic indicative of the angular displacement of the tensioning means from the datum position and the degree of wear in the endless drive transmission element is stored, and the value of the degree of wear in the endless drive transmission element is determined by inserting the monitored value of the characteristic indicative of the angular displacement of the tensioning means from the datum position in the equation

Preferably, the tensioning means is urged into engagement with a slack leg of the endless drive transmission element, and advantageously, the tensioning means is resiliently urged into engagement with the endless drive transmission element.

The invention also provides a baler comprising a drive transmission system adapted to transmit drive from a power source to an operating part of the baler, the drive transmission system comprising a rotatably mounted driving element adapted to receive drive from the power source, a rotatably mounted driven element adapted to transmit drive to the operating part of the baler, an endless drive transmission element cooperable with the driving element and the driven element for transmitting drive from the driving element to the driven element, and a tensioning means pivotally mounted about a pivot mounting and urgeable into engagement with the endless drive transmission element for tensioning thereof, wherein a monitoring means is provided for monitoring a value of a characteristic indicative of the angular displacement of the tensioning means about the pivot mounting from a datum position and to produce a signal indicative of the characteristic indicative of the angular displacement of the tensioning means about the pivot mounting from the datum position, and a signal processor is provided to determine the wear in the endless drive transmission element as a function of the value of the signal produced by the monitoring means indicative of the characteristic indicative of the angular displacement of the tensioning means about the pivot mounting from the datum position.

In one embodiment of the invention the monitoring means for monitoring the characteristic indicative of the angular displacement of the tensioning means about the pivot mounting from the datum position comprises an angle monitoring sensor, and preferably, an angle sensor.

In another embodiment of the invention the angle monitoring sensor comprises a Hall effect angle sensor.

In another embodiment of the invention the angle monitoring sensor comprises an inclinometer.

Preferably, the monitoring means is coupled between an anchor bracket on the baler, and the tensioning means.

In one embodiment of the invention the monitoring means is coupled to the one of the anchor bracket and the tensioning means through a linkage, and advantageously, the monitoring means is coupled to the tensioning means through the linkage.

In one embodiment of the invention the tensioning means is engageable with a slack leg of the endless drive transmission element.

Preferably, the tensioning means is urged into engagement with the endless drive transmission element, and more preferably, the tensioning means is resiliently urged into engagement with the endless drive transmission element.

Advantageously, the tensioning means is urged into engagement with the endless drive transmission element by a spring.

In one embodiment of the invention the spring is adapted to act between the tensioning means and an anchor mounting on the baler.

In one embodiment of the invention the spring comprises a tension spring, and in an alternative embodiment of the invention the spring comprises a compression spring, and in a further alternative embodiment of the invention the spring comprises a torsion spring.

In a further embodiment of the invention the spring comprises a mechanical spring, and in another embodiment of the invention the spring comprises one of a pneumatic spring or a hydraulic spring.

In one embodiment of the invention the tensioning means comprises a carrier arm, and preferably, the carrier arm is pivotally mounted about the pivot mounting of the tensioning means. Advantageously, the tensioning means is carried on the carrier arm.

Preferably, the degree of wear is determined as a function of the signal read from the monitoring means.

In one embodiment of the invention the tensioning means comprises a rotatably mounted tensioning element, and preferably, the tensioning means is rollably engageable with the endless drive transmission element. In an alternative embodiment of the invention the tensioning means is slideably engageable with the endless drive transmission element.

In another embodiment of the invention the rotatably mounted driving element comprises one of a driving sprocket or a driving pulley, and preferably, the rotatably mounted driven element comprises a corresponding one of a driven sprocket or a driven pulley, and advantageously, the endless drive transmission element comprises a corresponding one of a drive chain or a drive belt.

In another embodiment of the invention the tensioning means comprises one of a tensioning sprocket or a tensioning pulley engageable with a corresponding one of the drive chain or the drive belt of the drive transmission system.

In one embodiment of the invention a look-up table is stored in the memory of the signal processor, the look-up table comprising a plurality of values of the signal produced by the monitoring means indicative of the characteristic indicative of the angular displacement of the tensioning means from the datum position cross-referenced with corresponding values of the degree of wear in the endless drive transmission element, and the signal processor is programmed to determine the degree of wear in the endless drive transmission element by comparing the monitored value of the signal produced by the monitoring means with the values of the signal stored in the look-up table, and selecting the value of the degree of wear in the endless drive transmission element from the look-up table corresponding to or closest to the monitored value of the signal produced by the monitoring means as the value of the degree of wear in the endless drive transmission element.

Preferably, if the monitored value of the signal produced by the monitoring means falls between two consecutive values of the signal stored in the look-up table, the signal processor is programmed to determine a value of a ratio of the monitored value of the signal produced by the monitoring means to one of the lower value or the upper value of the two consecutive values of the signal stored in the look-up table, and to apply the determined value of the ratio to the corresponding one of the lower value or upper value of the two consecutive values of the degree of wear in the endless drive transmission element in the look-up table corresponding to the two consecutive values of the signal in the look-up table to determine the degree of wear in the endless drive transmission element.

In an alternative embodiment of the invention the value of the degree of wear in the endless drive transmission element is determined from an equation representing the relationship between the value of the characteristic indicative of the angular displacement of the tensioning means from the datum position and the value of the degree of wear in the endless drive transmission element.

In one embodiment of the invention the relationship between the value of the characteristic indicative of the angular displacement of the tensioning means from the datum position and the value of the degree of wear in the endless drive transmission element is a linear relationship, and the equation of the said relationship is in the form of

$$y = mx + c$$

where $y$ represents the value of the degree of wear in the endless drive transmission element,

$x$ represents the value of the characteristic indicative of the angular displacement of the tensioning means from the datum position, and

$m$ and $c$ are constants determined empirically

In another embodiment of the invention the relationship between the value of the characteristic indicative of the angular displacement of the tensioning means from the datum position and the value of the degree of wear in the endless drive transmission element is a non-linear relationship, and the equation of the relationship thereof comprises one of a power law equation or a polynomial equation.

In one embodiment of the invention the degree of wear in the endless drive transmission element is compared with a predefined maximum safe degree of wear, and if the degree of wear in the endless drive transmission element exceeds the predefined maximum safe degree of wear, an alert signal is produced alerting to the endless drive transmission element having exceeded the predefined maximum safe degree of wear in the endless drive transmission element.

In another embodiment of the invention the predefined maximum safe degree of wear in the endless drive transmission element is defined as a predefined maximum safe degree of the angular displacement of the tensioning means from the datum position.

In one embodiment of the invention the baler comprises a chassis, and preferably, the anchor bracket is rigidly mounted on the chassis of the baler, and advantageously, the anchor mounting is rigidly mounted on the chassis of the baler.

In another embodiment of the invention the tensioning means is pivotally coupled to the chassis by the pivot mounting, and preferably, the tensioning means is pivotal about a pivot axis, and advantageously, the pivot mounting defines the pivot axis.

In one embodiment of the invention the operating part of the baler comprises a pressing means adapted to rotate, press and form material therein into a bale, and the driven element of the drive transmission system is adapted to transmit drive to the pressing means, and preferably, the driven element is adapted to transmit drive to the pressing means to rotate the crop material, and in turn the bale in the pressing means.

In another embodiment of the invention the operating part of the baler comprises a pick-up means for picking up material to be baled from the ground, and preferably, the driven element of the drive transmission system is adapted to transmit drive to the pick-up means.

In another embodiment of the invention the operating part of the baler comprises a transfer means adapted to transfer material to be baled to the pressing means, and preferably, the driven element of the drive transmission system is adapted for transmitting drive to the transfer means.

In one embodiment of the invention the transfer means is adapted for transferring material picked up by the pick-up means to the pressing means.

In one embodiment of the invention the transfer means comprises a transfer rotor, and preferably, the transfer rotor is located intermediate the pick-up means and the pressing means.

In another embodiment of the invention the transfer rotor comprises a plurality of chopping blades for chopping material being transferred by the transfer rotor to the pressing means, and preferably, the chopping blades of the transfer rotor cooperate with a plurality of corresponding stator blades for chopping the material being transferred to the pressing means.

In one embodiment of the invention the baler comprises a fixed chamber baler, and the pressing means comprises a plurality of bale rotating rollers configured to define a bale chamber within which the bale is formed, the bale rotating rollers being spaced apart circumferentially around the bale chamber for rotating, pressing and forming material therein into a bale in the bale chamber. Advantageously, the bale rotating rollers are driven by drive transmitted thereto from the driven element of the drive transmission system.

In an alternative embodiment of the invention the baler comprises a belt baler, and the pressing means comprises one or more belts carried on a plurality of belt carrying rollers, at least one of the belt carrying rollers being driven for driving the one or more belts, for in turn rotating the bale. Preferably, one or more of the belt carrying rollers are driven by drive transmitted thereto from the driven element of the drive transmission system.

In one embodiment of the invention at least two of the drive transmission systems are provided, one of the drive transmission systems being adapted to transmit drive to the pressing means, and the other one of the drive transmission systems being adapted to transmit drive to the transfer means.

In a further embodiment of the invention three of the drive transmission systems are provided, a third one of which drive transmission systems is provided for transmitting drive to the pick-up means.

In one embodiment of the invention the tensioning means of each one of the drive transmission systems is provided with one of the monitoring means for monitoring the angular displacement of the corresponding one of the tensioning means from the corresponding datum positions thereof.

In another embodiment of the invention the baler comprises a gearbox adapted to receive power from the power source, and preferably, from a power take-off shaft of a prime mover.

In one embodiment of the invention the gearbox comprises a first power output shaft and a second power output shaft, the first power output shaft being adapted to produce drive for transmission to the pressing means of the baler, and preferably, the second power output shaft is adapted to produce drive for transmission to one or both of the transfer means and the pick-up means of the baler.

In one embodiment of the invention the drive produced on the first power output shaft of the gearbox is transmitted to the pressing means through one of the drive transmission systems.

In another embodiment of the invention the drive produced on the second power output shaft of the gearbox is transmitted to the one or both of the transfer means and the pick-up means through respective ones of the drive transmission systems.

In a further embodiment of the invention the drive produced on the second power output shaft of the gearbox is transmitted to the pick-up means through a further one of the drive transmission systems.

In another embodiment of the invention the baler is adapted for towing by a prime mover.

The invention also provides a combined baler/bale wrapper comprising the baler according to the invention.

The advantages of the invention are many. A particularly important advantage of the invention is that since the degree of wear in the endless drive transmission element of the drive transmission system is being monitored, the endless drive transmission element may be replaced at a suitable time before the degree of wear therein reaches a state at which the endless drive transmission element is due to break, thereby avoiding any danger of the endless drive transmission element failing in the baler while the baler is in service. By providing an alert signal indicating the need to replace the endless drive transmission element, an operator of the baler may arrange to have the endless drive transmission element replaced at an appropriate time when the baler is not in service, thereby, avoiding unnecessary downtime while the baler is in service.

A particularly important advantage of the invention is that by virtue of being able to replace the endless drive transmission element before it wears to the extent that it would fail, wear on the driving and the driven elements of the drive transmission system is prevented or at least minimised, thereby saving considerable cost and downtime which would otherwise be required to replace the driving and driven elements.

The invention will be more clearly understood from the following description of some preferred embodiments thereof, which are given by way of example only with reference to the accompanying drawings, in which:

Fig. 1 is a side perspective view of a combined baler/bale wrapper according to the invention comprising a baler also according to the invention,

Fig. 2 is a perspective view of the baler of Fig. 1 illustrating the baler in the state of Fig. 1,

Fig. 3 is a perspective view of the baler of Fig. 1 illustrating the baler in a different state to that of Fig. 1,

Fig. 4 is a perspective view of the baler of Fig. 1 illustrating the baler in a further different state to that of Fig. 3,

Fig. 5 is a cut-away perspective view of the baler of Fig. 1 with the baler in the state of Fig. 1,

Fig. 6 is a side elevational view of the baler of Fig. 1 with the baler illustrated in the state of Fig. 4,

Fig. 7 is a side elevational view of a portion of the baler of Fig. 1 from the other side of the baler to that of Fig. 6,

Fig. 8 is a top plan view of a portion of the baler of Fig. 1 illustrating a part of a drive transmission system of the baler of Fig. 1,

Fig. 9 is a side elevational view of the drive transmission system of Fig. 8 of the baler of Fig. 1,

Fig. 10 is a perspective view of the drive transmission system of Fig. 8 of the baler of Fig. 1,

Fig. 11 is an enlarged side elevational view of a portion of the drive transmission system of Fig. 8 of the baler of Fig. 1,

Fig. 12 is another perspective view of the drive transmission system of Fig. 8 of the baler of Fig. 1,

Fig. 13 is a block diagram of control circuitry of the baler of Fig. 1,

Fig. 14 illustrates the form of a look-up table used in conjunction with the drive transmission system of Fig. 8 of the baler of Fig. 1 for determining the degree of wear in the drive transmission system.

Fig. 15 is a side elevational view of a baler according to another embodiment of the invention, and

Fig. 16 is an enlarged side elevational view of a portion of the baler of Fig. 15 illustrating a drive transmission system of the baler of Fig. 15.

Referring to the drawings, and initially to Figs.

1 to 14 thereof, there is illustrated a combined baler/bale wrapper according to the invention indicated generally by the reference number 1, which is particularly suitable for baling and wrapping crop material, for example, silage, hay, straw and the like, and for producing relatively large wrapped cylindrical bales, commonly referred to as round bales, wrapped end-to-end in plastics film material. The wrapped bales, typically, are of diameter in the range of 500mm to 2,000mm and of axial length in the range of 1,100mm to 1,300mm, but more typically are of diameter in the range of 700mm to 1,300mm, and more typically, of axial length in the range of 1,200mm to 1,300mm. In this embodiment of the invention the combined baler/bale wrapper 1 comprises a baler 2 also according to the invention within which the bale is formed, and a bale wrapper 4 to which a formed bale is transferred from the baler 2 for end-to-end wrapping thereof.

The combined baler/bale wrapper 1 is of the type which is disclosed in PCT Published Patent Application Specification No. WO 2002/076183, and the baler 2 as well as the bale wrapper 4 are substantially similar to the baler and the bale wrapper of the combined baler/bale wrapper disclosed in PCT Published Specification No. WO 2002/076183. The combined baler/bale wrapper 1 is suitable for towing by a prime mover, and typically, for towing by a tractor, and is suitable for powering by a power take-off shaft of the tractor, and by the hydraulic system of the tractor, as will be understood by those skilled in the art.

The baler 2 and the bale wrapper 4 are mounted on a chassis 3 supported on a pair of rotatably mounted main ground engaging wheels 5. A hitch 9 extends forwardly from the chassis 3 for hitching the combined baler/bale wrapper 1 to the tractor. The baler 2 is of the type commonly referred to as a roller baler or a fixed chamber baler, although, the baler 2 may be a variable chamber baler, of the type commonly referred to as a belt baler. Since only the baler 2 is relevant to the present invention, only the baler 2 will be described.

The baler 2 comprises a pressing means for, rotating, pressing and forming a bale, which in this embodiment of the invention comprises a bale chamber 10, within which the bale is rotated, pressed and formed. The bale chamber 10 is defined by three segments, namely, a fixed segment 12, a tipping segment 14 and a closure segment 15, and by a plurality of transversely extending bale rotating rollers 17 rotatably carried by the fixed, tipping and closure segments 12,14 and 15. The bale rotating rollers 17 are spaced circumferentially around the bale chamber 10 and define the circumferential periphery of the bale chamber 10. The fixed segment 12 comprises three bale rotating rollers 17a. The tipping segment 14 comprises five bale rotating rollers 17b, and the closure segment 15 comprises ten bale rotating rollers 17c, although the number of bale rotating rollers 17 will depend on the size of the bale chamber 10 and the diameter of the bale rotating rollers 17.

The bale rotating rollers 17a of the fixed segment 12 of the bale chamber 10 extend transversely between and are rotatably carried on a pair of transversely spaced apart fixed end walls 19, which are rigidly secured to the chassis 3, and which with the bale rotating rollers 17a form the fixed segment 12. A pair of transversely spaced apart tippable end walls 20, between which the bale rotating rollers 17b extend and are rotatably carried thereon, form the tipping segment 14. The tippable end walls 20 are pivotally coupled to the chassis 3 about a transversely extending first pivot axis 22, about which the tipping segment 14 is pivotal. The closure segment 15 comprises a pair of transversely spaced apart closure end walls 24, between which the bale rotating rollers 17c extend and are rotatably carried thereon, to form with the closure end walls 24 the closure segment 15. The closure segment 15 is pivotally coupled to the fixed end walls 19 about a transversely extending second pivot axis 25. The fixed end walls 19, the tippable end walls 20 and the closure end walls 24 together define the opposite ends of the bale chamber 10.

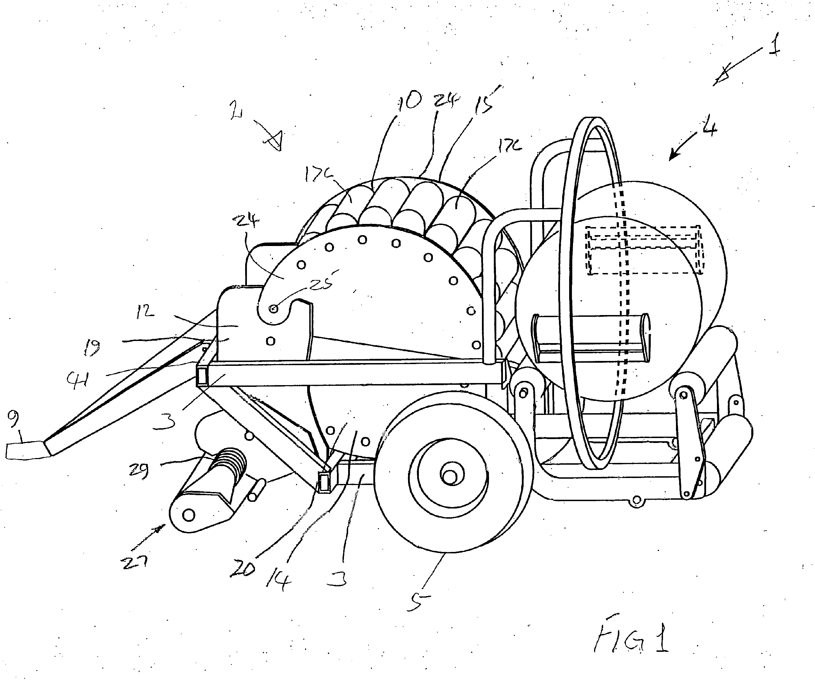

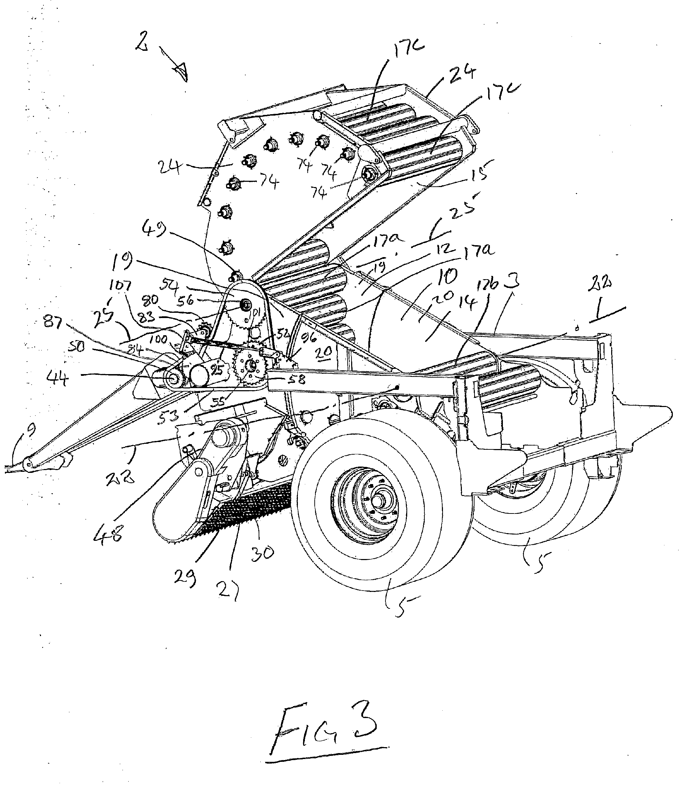

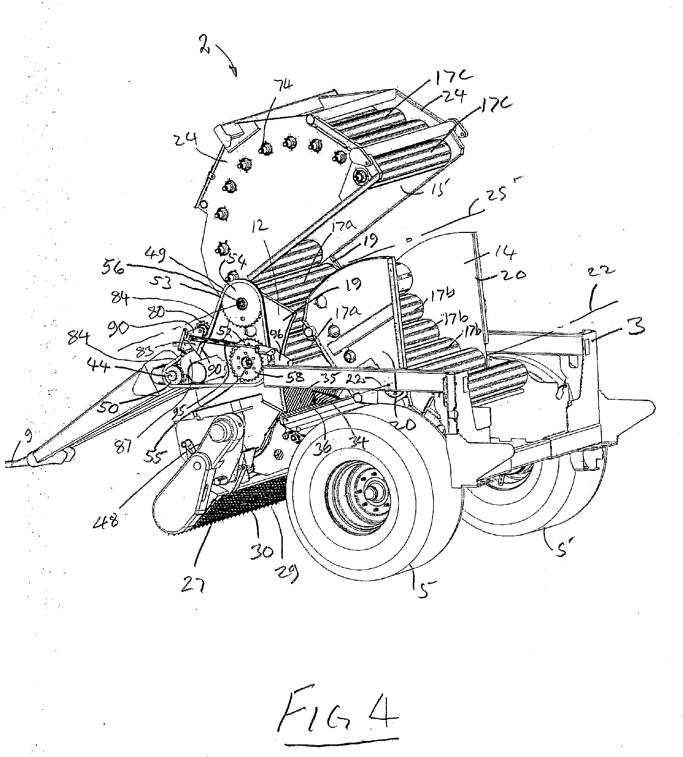

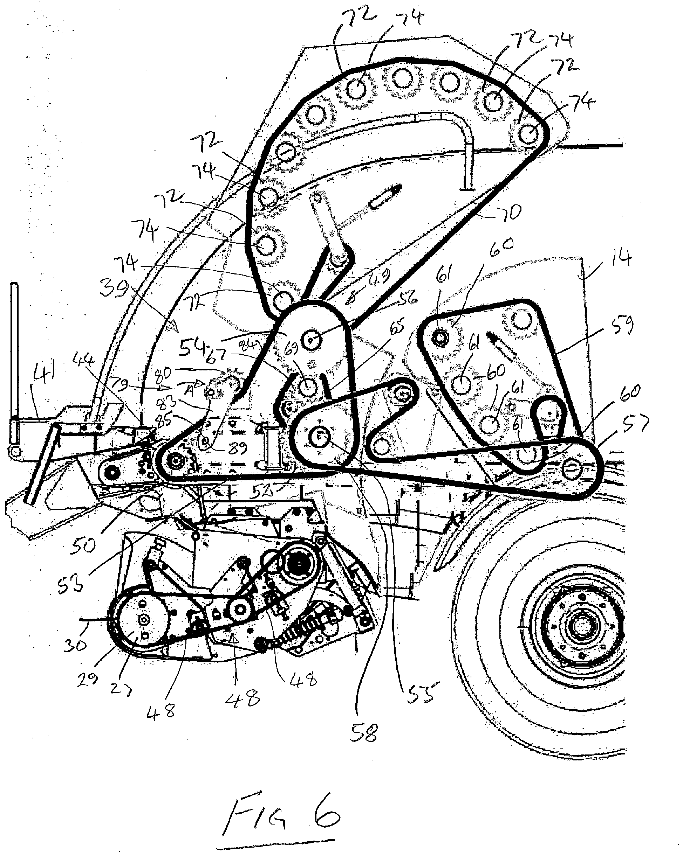

The tipping segment 14, which is formed by the tippable end walls 20 and the bale rotating rollers 17b, is pivotal about the first pivot axis 22 from a bale forming state illustrated in Figs. 1, 2 and 5 for forming a bale in the bale chamber 10, to a discharge state illustrated in Figs. 4 and 6 for discharging a formed bale from the bale chamber 10 onto the bale wrapper 4 for end-to-end wrapping thereof. The closure segment 15, which comprises the closure end walls 24 and the bale rotating rollers 17c, is pivotal about the second pivot axis 25 from a closed state illustrated in Figs. 1, 2 and 5 cooperating with the fixed and tipping segments 12 and 14 to form the bale chamber 10, to an open state illustrated in Figs. 3, 4 and 6 for facilitating discharge of a bale from the bale chamber 10 by the tipping segment 14.

A pair of hydraulic rams (not shown) are located on opposite sides of the baler 2 acting between the chassis 3 and the closure element 15 for urging the closure element 15 between the closed state and the open state. The tipping segment 14 is coupled to the closure segment 15 by a pair of link members (not shown), so that as the closure segment 15 is urged from the closed state to the open state, the tipping segment 14 is urged from the bale forming state and the discharge state, and vice versa. The hydraulic rams (not shown) also apply pressure to the closure segment 15 in the closed state thereof for applying pressure to the crop material in the bale chamber 10 as the formation of the bale is nearing completion, in order to determine the density of the formed bale, as will be understood by those skilled in the art.

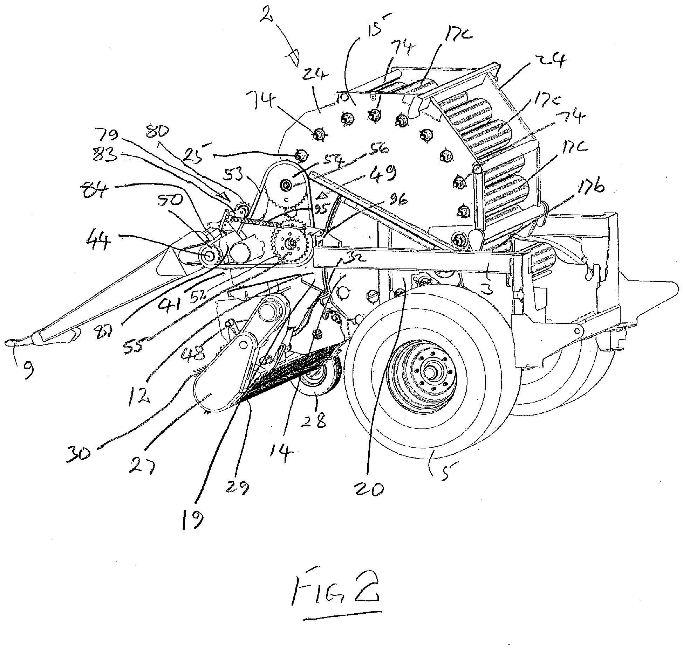

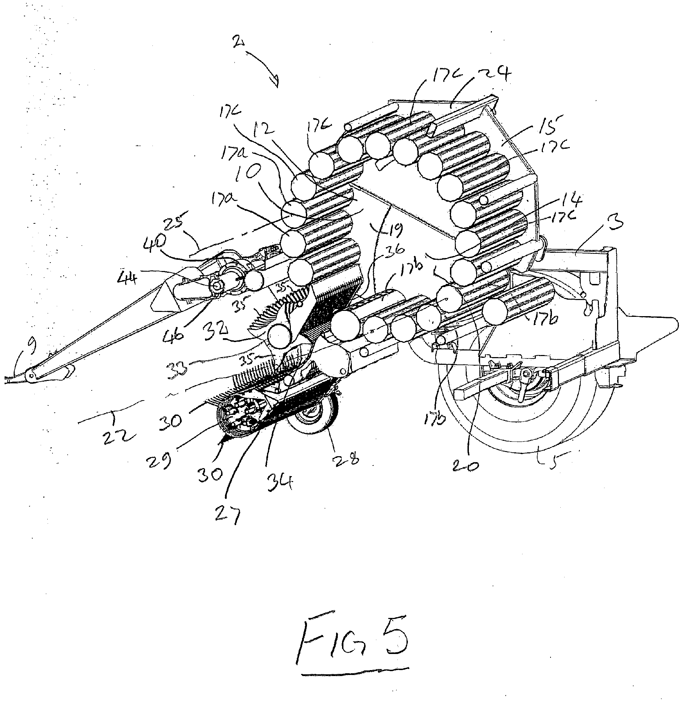

A pick-up means, in this case a pick-up mechanism 27 is pivotally coupled to the chassis 3 and is supported on a pair of transversely spaced apart secondary ground engaging wheels 28, only one of which is illustrated in Figs. 2 and 5. The pick-up mechanism 27 comprises a rotatably mounted pick-up drum 29 having a plurality of pick-up tines 30 extending radially therefrom for engaging and picking up crop material lying on the ground as the pick-up drum 29 rotates. The tines 30 extending radially from the drum 29 are circumferentially spaced apart around the drum 29 and are also longitudinally spaced apart along the drum 29. The pick-up drum 29 transfers the crop material from the ground onto a transfer passageway 34 of the pick-up mechanism.

A transfer means, in this embodiment of the invention comprising a transfer rotor 32 is rotatably mounted in the transfer passageway 34 intermediate the pick-up drum 29 and the bale chamber 10 for transferring crop material picked up by the pick-up drum 29 along the transfer passageway 34 to the bale chamber 10 for baling therein. The transfer rotor 32 comprises a drum 33 rotatably mounted on the transfer passageway and a plurality of chopping blades 35 extending radially from the drum 33. The chopping blades 35 are spaced apart longitudinally along the drum 33, and are circumferentially spaced apart and angularly staggered around the drum 33. The chopping blades 35 are cooperable with a plurality of correspondingly transversely spaced apart stator blades 36 for chopping crop material as it is being transferred along the transfer passageway 34 to the bale chamber 10. The stator blades 36 are pivotally mounted beneath the transfer passageway 34 and are pivotal from a withdrawn state below the transfer passageway 34 spaced apart from the transfer rotor 32 to a working state extending through the transfer passageway 34 and cooperating with the chopping blades 35 of the transfer rotor 32 for chopping the crop material as it is being transferred by the transfer rotor 32 along the transfer passageway 34. Such transfer rotors and stator blades as the transfer rotor 32 and the stator blades 36 and their operation will be well known to those skilled in the art.

Up to this the baler 2 of the combined baler/bale wrapper 1 is as discussed above a fixed chamber baler and is of the type which is disclosed in PCT Specification No. WO 2002/076183, and will be well known to those skilled in the art.

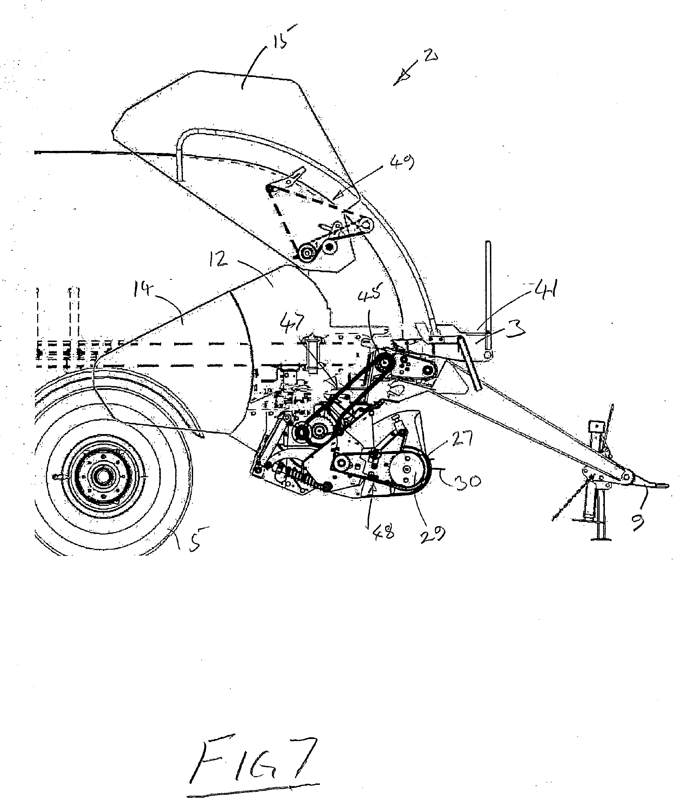

A transmission system indicated generally by the reference numeral 39 is provided for receiving mechanical drive from a power source, typically, from a power take-off shaft of the tractor towing the combined baler/bale wrapper 1, and typically, transmitted through a Cardan shaft (not shown) from the power take-off shaft of the tractor. The mechanical drive is transmitted through the drive transmission system 39 to the bale rotating rollers 17, the transfer rotor 32 and the pick-up drum 29. The transmission system 39 comprises a gearbox 40 mounted on the chassis 3 adjacent a forward end 41 of the chassis 3. The gearbox 40 comprises an input shaft 42 extending longitudinally forwardly from the gearbox 40 for coupling to the Cardan shaft (not shown) and a pair of transversely extending power output shafts extend transversely from the gearbox 40 from respective opposite ends 43 thereof, namely, a first output shaft 44 and a second output shaft 45. The second output shaft 45 is adapted to apply drive through a rotor chain drive transmission system 47 to the transfer rotor 32 for driving thereof, and in turn, through a pick-up chain drive transmission system 48 to the pick-up drum 29 of the pick-up mechanism 27 for driving thereof. The rotor chain drive transmission system 47 is illustrated in Fig. 7, and the pick-up chain drive transmission system 48 is illustrated in Figs. 6 and 7, and both will be well known to those skilled in the art, and further description should not be required.

The first output shaft 44 is adapted to produce drive for transmission to the bale rotating rollers 17 of the bale chamber 10 for rotating the bale rotating rollers 17, and in turn for rotating the crop material and in turn a bale in the bale chamber 10, through a drive transmission system indicated generally by the reference numeral 49. The drive transmission system 49 comprises a rotatably mounted driving element, namely, a driving sprocket 50, a pair of rotatably mounted driven elements, namely, a first driven sprocket 52 and a second driven sprocket 54, and an endless drive transmission element, namely, an endless main drive chain 53. The main drive chain 53 extends around and cooperates with the driving sprocket 50, the first driven sprocket 52 and the second driven sprocket 54 for transmitting drive from the driving sprocket 50 to the first and second driven sprockets 52 and 54. The driving sprocket 50 is mounted fast on the first output shaft 44 of the gearbox 40. The first driven sprocket 52 is mounted fast on a first transmission shaft 55 rotatably mounted in the chassis 3, through which drive from the first driven sprocket 52 is transmitted to the bale rotating rollers 17a and 17b of the fixed segment 12 and the tipping segment 14, respectively, of the bale chamber 10. The second driven sprocket 54 is mounted fast on a second transmission shaft 56 rotatably mounted in the chassis 3, through which drive from the second driven sprocket 54 is transmitted to the bale rotating rollers 17c of the closure segment 15 of the bale chamber 10.

A first chain drive transmission 57 comprising a first transmission sprocket 58 fast on the first transmission shaft 55 transmits drive from the first transmission shaft 55 to the bale rotating rollers 17b of the tipping segment 14. The first chain drive transmission 57 drives a secondary chain drive transmission 59 which in turn drives a plurality of sprockets 60 mounted fast on shafts 61 of the bale rotating rollers 17b of the tipping segment 14 for in turn rotating the bale rotating rollers 17b.

A second chain drive transmission 65 comprising a second transmission sprocket 66 mounted fast on the first transmission shaft 55 drives a sprocket 67 fast on a shaft 69, from which drive is transmitted to the bale rotating rollers 17a of the fixed segment 12 of the bale chamber 10.

A third chain drive transmission 70 comprising a third transmission sprocket 71 mounted fast on the second transmission shaft 56 transmits drive to sprockets 72 mounted fast on shafts 74 of the bale rotating rollers 17c of the closure segment 15 of the bale chamber 10 for driving the bale rotating rollers 17c of the closure segment 15.

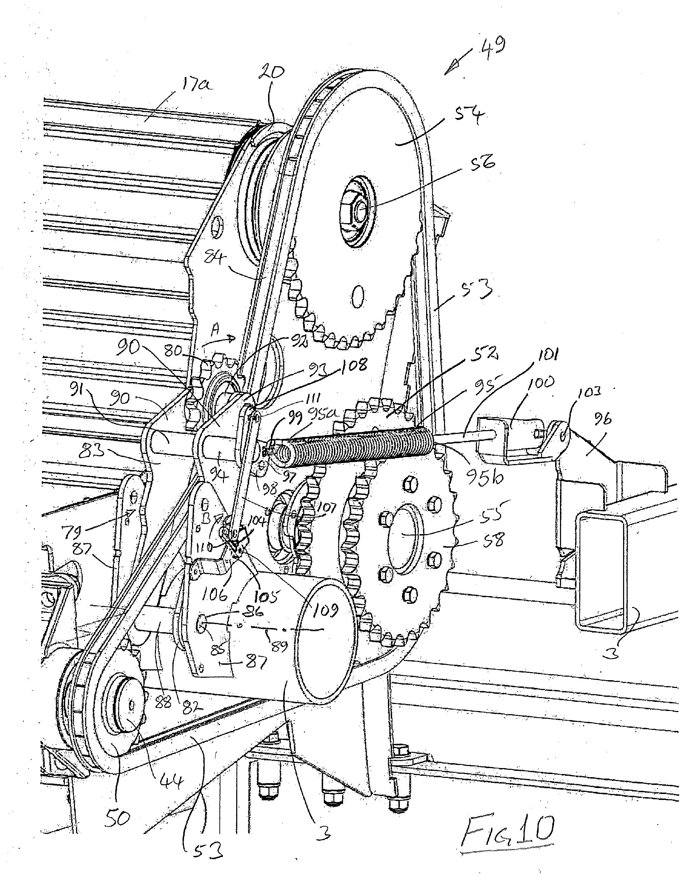

A tensioning means comprising a tensioning unit 79 which comprises a tensioning sprocket 80 rotatably mounted on the tensioning unit 79 is engageable with a slack leg 84 of the main drive chain 53 extending between the driving sprocket 50 and the second driven sprocket 54 for tensioning the slack leg 84 of the main drive chain 53. The tensioning unit 79 comprises a carrier arm 83 extending between a proximal end 82 and a distal end 93. The carrier arm 83 is pivotally mounted on the chassis 3 by a pivot mounting, which defines a main pivot axis 89 about which the carrier arm 83 is pivotal. The carrier arm 83 comprises a pair of transversely spaced apart elongated plate members 90 which are rigidly secured together by a first shaft 88 and a second shaft 91. The first shaft 88 extends between the plate members 90 adjacent the proximal end 82 of the carrier arm 83, and the second shaft 91 extends between the plate members 90 towards the distal end 93 of the carrier arm 83. A pair of main pivot shafts 85 concentric with the first shaft 88 extend from the first shaft 88 through the respective plate members 90 of the carrier arm 83 and pivotally engage corresponding bores 86 located in a pair of transversely spaced apart mounting plates 87, which are rigidly secured to the chassis 3, to form the pivot mounting of the carrier arm 83, see in particular Fig. 10. The main pivot shafts 85 define the main pivot axis 89 about which the carrier arm 83 is pivotal relative to the chassis 3. A third shaft 92 extending between the plate members 90 of the carrier arm 83 and rigidly secured to the plate members 90 adjacent the distal end 93 thereof rotatably carries the tensioning sprocket 80.

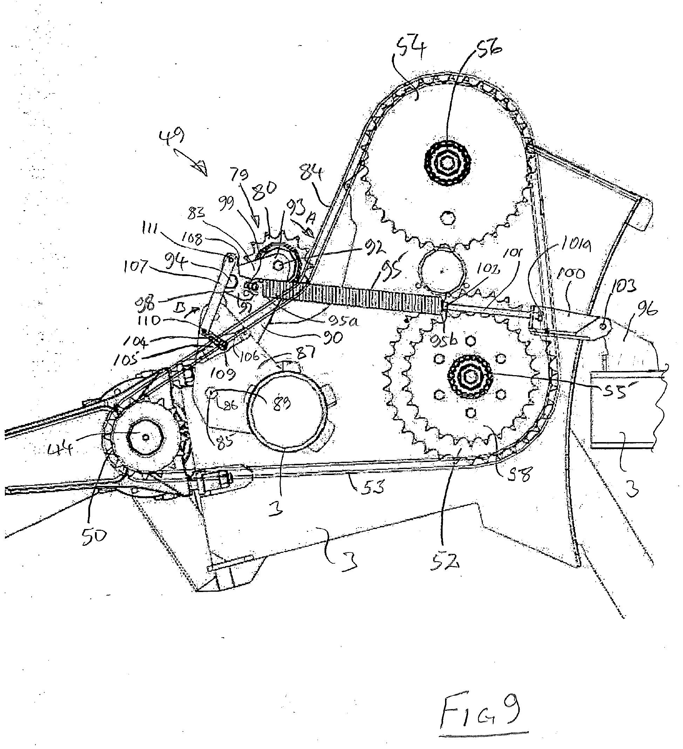

An urging means, in this embodiment of the invention comprising a resilient urging means provided by a tension spring 95 acts between the carrier arm 83 and an anchor mounting, namely, an anchor mounting bracket 96 rigidly secured to the chassis 3 for urging the carrier arm 83 about the main pivot axis 89 in the direction of the arrow A, for in turn urging the tensioning sprocket 80 into engagement with the slack leg 84 of the main drive chain 53 for tensioning the slack leg 84 thereof, see Figs. 9 and 10. A first end 95a of the tension spring 95 is coupled to the carrier arm 83 by a coupling bracket 98 mounted fast on an extension 94 of the second shaft 91, which extends between the plate members 90 of the carrier arm 83. The first end 95a of the tension spring 95 is coupled to a limb 97 of the coupling bracket 98 by a coupling hook 99 extending from the first end 95a of the tension spring 95. The tension spring 95 is coupled to the anchor mounting bracket 96 by a coupling bracket 100 and a threaded adjusting rod 101. The coupling bracket 100 is pivotally coupled to the anchor mounting bracket 96 by a pivot pin 103. The threaded adjusting rod 101 extends between the coupling bracket 100 and the tension spring 95, and is adjustably secured to the tension spring 95 by a threaded nut 102 rigidly secured to the tension spring 95 adjacent a second end 95b thereof. The threaded adjusting rod 101 terminates in the coupling bracket 100 in a hexagonal head 101a, and is retained captive in the coupling bracket 100 by the head 101a. The tensioning force applied by the tension spring 95 to the tensioning unit 79 for in turn urging the tensioning sprocket 80 into engagement with the slack leg 84 of the main drive chain 53 is adjusted by adjusting the threaded adjusting rod 101 into and out of the tension spring 95 through the threaded nut 102.

It has been found that the main drive chain 53 stretches as it wears, and the stretching of the main drive chain 53 due to wear results in the carrier arm 83 of the tensioning unit 79 pivoting about the main pivot axis 89 in the direction of the arrow A towards the main drive chain 53, for in turn maintaining the tensioning sprocket 80 in engagement with the slack leg 84 of the main drive chain 53 to take up the slack therein due to wear in the main drive chain 53.

It has been found that there is a relationship between the degree of stretching of the main drive chain 53 due to wear and the degree of wear in the main drive chain 53. Additionally, it has been found that there is a relationship between the degree of stretching in the main drive chain 53 and the angular displacement of the carrier arm 83 about the main pivot axis 89 in the direction of the arrow A. The greater the degree of wear in the main drive chain 53, and in turn the degree of stretching of the main drive chain 53, the greater will be the angular displacement of the carrier arm 83 in the direction of the arrow A about the main pivot axis 89.

In order to monitor the degree of wear in the main drive chain 53, a datum position of the carrier arm 83 of the tensioning unit 79 is determined. The datum position of the carrier arm 83 may be any arbitrarily selected known position from which the carrier arm 83 can pivot in the direction of the arrow A about the main pivot axis 89. In this embodiment of the invention the datum position of the carrier arm 83 is determined as being the position taken up by the carrier arm 83 with the tensioning sprocket 80 urged into engagement with the slack leg 84 of a new previously unused main drive chain 53 under the action of the tension spring 95 when the baler 2 is operating in a no-load state without crop material in the bale chamber 10 and without crop material in the transfer passageway 34 and with the pick-up drum 29 and the transfer rotor 32 free of crop material.

In order to determine the degree of wear in the main drive chain 53, a monitoring means is provided for monitoring the angular displacement of the carrier arm 83 about the main pivot axis 89 from the datum position. In this embodiment of the invention the monitoring means comprises a Hall effect angle sensor 105. The angle sensor 105 comprises a housing 106 mounted rigidly on the outer one of the mounting plates 87. An arm 104 of the angle sensor 105 is mounted fast on and extends radially from a secondary pivot shaft 109, which is pivotally mounted in the housing 106. An angle detecting system (not shown) in the housing 106 monitors the angular rotation of the secondary pivot shaft 109, and in turn the angular displacement of the arm 104 relative to the housing 106, and produces an electronic signal indicative of the angular displacement of the arm 104 relative to the housing 106. A linkage provided by a link member 107 pivotally coupled to the arm 104 of the angle sensor 105 connects the arm 104 to another limb 108 of the coupling bracket 98 of the carrier arm 83. The link member 107 is pivotally coupled to the arm 104 of the angle sensor 105 by a pivot pin 110, and is pivotally coupled to the limb 108 of the coupling bracket 98 by a pivot pin 111.

Accordingly, as the carrier arm 83 is displaced angularly about the main pivot axis 89 from the datum position in the direction of the arrow A in response to the degree of wear in the main drive chain 53 increasing, the arm 104 of the angle sensor 105 is proportionally pivoted with the pivot shaft 109 relative to the housing 106 in the direction of the arrow B. Therefore, the electronic signal produced by the angle sensor 105 indicative of the angular displacement of the arm 104 relative to the housing 106 is in turn indicative of the angular displacement of the carrier arm 83 about the main pivot axis 89 from the datum position in the direction of the arrow A.

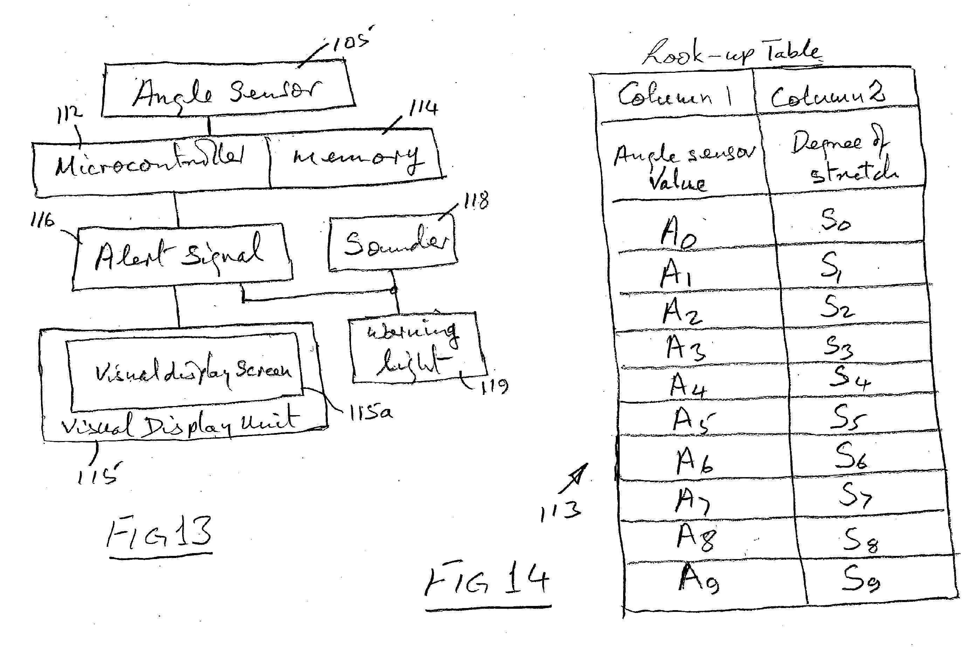

A signal processor provided by a microcontroller 112 of the baler 2, see Fig. 13, is programmed to read signals from the angle sensor 105 and to determine the degree of wear in the main drive chain 53, as will be described below. On determining that the degree of wear in the main drive chain 53 has reached a predefined maximum safe degree of wear, the microcontroller 112 is programmed to produce an alert signal 116 alerting to the main drive chain 53 having reached the predefined maximum safe degree of wear. The alert signal 116 is adapted for applying to a visual display unit 115 which is located in the cab of the tractor towing the baler/bale wrapper, and on a visual display screen 115a of which messages and data indicative of the operation of the baler 2 and the bale wrapper 4 are displayed graphically and in text to the driver of the tractor. The visual display unit 115 is responsive to the alert signal 116 from the microcontroller 112, to display a message on the screen 115a alerting the driver to the necessity of replacing the main drive chain 53. The message may be in text or in graphical form, and in this case is in both text and graphical form. Additionally, in this case the visual display unit 115 also comprises a sounder which is activated by the alert signal 116 to produce an aurally perceptible signal.

Additionally or alternatively, the alert signal 116 may be adapted for applying to a sounder 118 separate to the sounder in the visual display unit 115 to produce an audible alarm and/or to a warning light 119 to activate the warning light 119 to alert to the degree of wear in the main drive chain 53 having reached the predefined maximum safe degree of wear and to the necessity of replacing the main drive chain 53 before it breaks. The sounder 118 and/or the warning light 119 may be mounted on the baler 2 or in the cab of the tractor towing the combined baler/bale wrapper 1.

The relationship between the value of the signal produced by the angle sensor 105 and the degree of wear in the main drive chain 53 is empirically determined from a standard baler identical to the baler 2 according to the invention. The standard baler is provided with an angle sensor identical to the angle sensor 105 identically mounted on the standard baler. The standard baler is operated with a previously unused new standard drive chain, identical to the main drive chain 53 under normal operating conditions. The value of the signal produced by the angle sensor of the standard baler is monitored at the end of each of a plurality of sequential predefined running time periods until the standard drive chain breaks. Each predefined running time period may be of any suitable time duration. However, in this case the predefined running time period is 20 hours

Initially, with the new unused standard drive chain fitted to the standard baler, the datum position of the carrier arm is determined by initially running the standard baler in the no-load state without crop material in the bale chamber and without crop material in the transfer passageway and with the pick-up drum and the transfer rotor of the standard baler free of crop material. The datum position of the carrier arm of the standard baler is determined as being the angular position of the carrier arm about the main pivot axis of the carrier arm with the standard baler running in the no-load state. The value of the signal produced by the angle sensor of the standard baler is read by a microprocessor of the standard baler and stored in a look-up table 113 in the memory of the microprocessor of the standard baler as the value of the signal corresponding to the datum position of the carrier arm of the standard baler, see Fig. 14.

The standard baler is then run under normal operating conditions until the standard drive chain breaks. At the end of each predefined running time period, with the standard baler operating in the no load state, the value of the signal produced by the angle sensor is read by the microprocessor and stored in the look-up table 113. The degree of stretch in the standard drive chain is measured, and the value of the degree of stretch is entered into the microprocessor and stored in the look-up table 113 and cross-referenced with the corresponding value of the signal read from the angle sensor indicative of the angular displacement of the carrier arm from the datum position. The value of the signal produced by the angle sensor of the standard baler corresponding to the datum position of the carrier arm is set to zero in the look-up table 113, and the value of the signal produced by the angle sensor of the standard baler corresponding to the datum position of the carrier arm is subtracted from the values subsequently read by the microprocessor of the standard baler from the angle sensor, so that the values of the signal subsequently read from the angle sensor of the standard baler are stored in the look-up table with respect to the value of the signal produced by the angle sensor corresponding to the datum position of the carrier arm being equal to zero.

It has been found that the life of the standard drive chain to breakage is 180 hours. Therefore, by selecting the predefined running time periods as being of 20 hours duration, nine values of the signal produced by the angle sensor of the standard baler and nine corresponding values of the degree of stretch of the standard drive chain of the standard baler are stored and cross-referenced in the look-up table 113 as is the value of zero of the signal corresponding to the datum value of the carrier arm of the standard baler cross-referenced with the value of the degree of stretch of the standard drive chain also of zero value.

Referring now to Fig. 14, the look-up table 113 comprises two columns, namely, column 1 and column 2. The values $A_0$ and $A_9$ of the signal read from the angle sensor of the standard baler are stored in column 1 of the look-up table 113 with the value of the signal $A_0$ corresponding to the datum position of the carrier arm of the standard baler set at zero, and the subsequent values $A_1$ to $A_9$ of the signal corrected, so that the subsequent values of the signal are with respect to the value of the signal corresponding to the datum position of the carrier arm being equal to zero, as discussed above. The corresponding values $S_0$ to $S_9$ of the degree of stretch in the standard drive chain are stored in column 2 of the look-up table 113 cross-referenced with the corresponding corrected values $A_0$ to $A_9$ of the signal read from the angle sensor.

The value $S_0$ of the degree of stretch of the standard drive chain is also set to the value zero.

The degree of wear in the standard drive chain and in the main drive chain 53 is directly proportional to the degree of stretch in the standard drive chain and in the main drive chain 53. A maximum safe degree of wear for the standard drive chain is set as a predefined maximum safe degree of wear for the main drive chain 53. The predefined maximum safe degree of wear is set based on a maximum safe degree of stretch of the standard drive chain, which in turn is a predefined maximum safe degree of stretch for the main drive chain 53. In determining the predefined maximum safe degree of stretch two matters are taken into account. Firstly, the predefined maximum safe degree of stretch is determined so that there are a reasonable number of working hours remaining in the standard drive chain before the chain would break in order to ensure that there would be a sufficient working time remaining in the main drive chain 53 of the baler 2 to permit at least a full days working of the baler to be carried out before the main drive chain 53 would fail to avoid downtime of the baler 2 during a baling session. Secondly, the predefined maximum safe degree of stretch in the standard drive chain is determined such that the main drive chain 53 in the baler 2 would be replaced with a new main drive chain before the degree of wear in the main drive chain 53 would result in excessive wear and damage to the driving and driven sprockets 50, 52 and 54. In this case the maximum safe degree of wear in the standard drive chain is set at the degree of stretch in the main drive chain which corresponds to the value of the signal produced by the angle sensor of the standard baler which corresponds to the value of stretch at approximately 160 hours of use of the standard drive chain, namely, the value $S_8$ in the look-up table 113. The value $S_8$ is stored along with the look-up table 113 in the memory of the microprocessor of the standard baler as the predefined maximum safe degree of stretch. The value $A_8$ of the signal read from the angle sensor of the standard baler corresponding to the value $S_8$ of the degree of stretch of the standard drive chain may also be stored along with the value $S_8$ of the predefined maximum safe degree of stretch for the main drive chain 53.

The look-up table 113 is downloaded from the memory of the microprocessor of the standard baler, and stored in the memory 114 of the microcontroller 112 of the baler 2, and of each baler similar to the baler 2 which is subsequently produced, and which is similar to the standard baler. The value of the maximum safe degree of stretch of the standard drive chain is also downloaded from the memory of the microprocessor of the standard baler as either or both the values $S_8$ and $A_8$, and stored in the memory 114 of the microcontroller 112 of the baler 2, and of each baler similar to the baler 2 which is subsequently produced, and which is similar to the standard baler, as the predefined maximum safe degree of stretch of the main drive chain 53, which corresponds to the predefined maximum safe degree of wear thereof.

Initially, before each baler 2 which is similar to the standard baler is used, the datum position of the carrier arm 83 is calibrated by operating the baler 2 in the no-load state as described above. With the baler 2 operating in the no-load state, the value of the signal produced by the angle sensor 105 is read by the microcontroller 112 of the baler 2 and is stored in the memory 114, as being the calibration value of the signal indicative of the datum position of the carrier arm 83. The stored calibration value of the signal read from the angle sensor 105 corresponding to the datum position of the carrier arm 83 is subtracted by the microcontroller 112 from each of the values of the signal subsequently read from the angle sensor, so that the subsequent read values of the signal are with respect to the value of the signal corresponding to the datum position of the carrier arm being zero.

During normal operation of the baler 2, as the baler 2 is operated for baling crop material or other material, the microcontroller 112 of the baler 2 periodically reads signals from the angle sensor 105 when the baler 2 is operating in the no-load state, typically, just after a bale has been discharged from the bale chamber 10, and the tipping segment 14 and the closure segment 15 have been returned to the bale forming state. The calibration value of the signal is subtracted from the value of the signal read from the angle sensor 105, and the difference value is compared with the values of the signal stored in column 1 of the look-up table 113 stored memory in the microcontroller 112. The value of the degree of stretch of the main drive chain 53 stored in column 2 of the look-up table 113 corresponding to the difference value of the signal read from the angle sensor 105 is read from the look-up table 113, and compared with the stored value of the predefined maximum safe degree of stretch stored in the memory 114 of the microcontroller 112. When the microcontroller 112 has determined that the degree of stretch in the main drive chain 53 has reached the predefined maximum safe degree of stretch, the microcontroller 112 then outputs the alert signal 116 to the visual display unit 115 to display the alert message on the visual display screen thereof, alerting the driver to the necessity of replacing the main drive chain 53. The alert signal 116 may also be applied to the sounder 118 and the warning light 119 to alert to the necessity of replacing the main drive chain 53.

If the difference value of the signal read from the angle sensor 105 falls between two consecutive values of the signal stored in column 1 in the look-up table 113, the microcontroller 112 is programmed to determine the value of the degree of wear in the main drive chain 53 from the two consecutive values of the degree of stretch in the look-up table 113, corresponding to the two consecutive values of the signal in column 1 of the look-up table, between which the difference value of the read signal from the angle sensor 105 falls. The microcontroller 112 is programmed to determine the value of the ratio of the difference value of the read signal to the lower value of the two consecutive values of the signal stored in column 1 of the look-up table, between which the difference value of the read signal falls. The microcontroller 112 is programmed to then determine the degree of stretch in the main drive chain 53 by applying the ratio to the lower value of the two consecutive values of the degree of stretch in column 2 of the look-up table 113 corresponding to the two values of the signal stored in column 1 of the look-up table, between which the difference value of the signal read from the angle sensor 105 falls.

It is also envisaged that the predefined maximum safe degree of wear may be stored in the memory 114 of the microcontroller 112 as the value $A_8$ in the look-up table 113 or any other suitable value. In which case, in order to determine when the main drive chain 53 of the baler 2 has reached the predefined maximum safe degree of wear, the microcontroller 112 would compare each value of the signal read from the angle sensor 105 of the baler 2 when the calibration value thereof is subtracted therefrom directly with the stored value $A_8$ or other suitable stored value corresponding to the predefined maximum safe degree of wear of the main drive chain 53. On the value of the signal read from the angle sensor 105 less the calibration value thereof reaching the value $A_8$ or other suitable stored value, the microprocessor 118 would determine that the chain had reached the predefined maximum safe degree of wear.

In use, as the combined baler/bale wrapper 1 is being towed by the tractor along an elongated windrow of crop material lying on the ground, the crop material is picked up by the pick-up drum 29, and is transferred by the transfer rotor 32 to the bale chamber 10, the crop material is rotated and pressed in the bale chamber 10 to form the bale. The microcontroller 112 periodically reads the signals from the angle sensor 105 when the baler 2 is operating in the no-load state just after a bale has been discharged from the bale chamber 10 and the tipping segment 14 and the closure segment 15 have been returned to the bale forming state and the closed state, respectively. The microcontroller 112 subtracts the calibration value of the signal stored in the memory 114 from the read value of the signal, and compares the difference value of the signal with the signal values in column 1 of the look-up table 113 stored in the memory 114 of the microcontroller 112, and determines the degree of stretch in the main drive chain 53 due to wear from the corresponding value of the degree of stretch from column 2 of the look-up table 113, or from the ratio of the difference value of the signal to the lower value of two consecutive values of the signal in column 1 of the look-up table 113 between which the difference value of the signal falls, when applied to the corresponding lower value of the degree of stretch in column 2 of the look-up table 113. The microcontroller 112 then compares the determined value of the degree of stretch due to wear in the main drive chain 53 with the stored value of the predefined maximum safe degree of stretch stored in the memory 114 of the microcontroller. On the microcontroller 112 determining that the degree of stretch in the main drive chain 53 has reached the predefined maximum safe degree of stretch, the microcontroller 112 outputs the alert signal 116 alerting to the main drive chain 53 having reached the predefined maximum safe degree of wear to the visual display unit 115 for display thereon, and may also output the alert signal 116 to the sounder 118 and to the warning light 119.

It is also envisaged that as each value of the degree of stretch in the main drive chain 53 is determined, the microcontroller 112 would produce a signal indicative of the degree of wear in the main drive chain 53 which would be applied to the visual display unit 115 in the cab of the tractor towing the combined baler/bale wrapper 1, which would display either graphically or in alpha-numeric text an indication of the degree of wear in the main drive chain 53.

While not illustrated in the drawings, it is envisaged that a drive transmission system, which operates on a similar principle to that of the drive transmission system 49 through which drive is transmitted from the first output shaft 44 of the gearbox 40 to the bale rotating rollers 17 of the bale chamber 10, may be incorporated into the rotor chain drive transmission system 47 and also into the pick-up chain drive transmission system 48, through which drive from the second output shaft 45 of the gearbox 40 is transmitted to the transfer rotor 32 and to the pick-up drum 29 of the pick-up mechanism 27, respectively. In which case, a monitoring means would be provided for monitoring the displacement of a tensioning means for tensioning a slack leg of a drive chain of the corresponding drive transmission system from a datum position. The signals from the monitoring means of the respective drive transmission systems would then be read by the microcontroller 112 for determining when the degree of stretch due to wear in the respective drive chains of the drive transmission systems, through which drive is transmitted to the transfer rotor 32 and the pickup drum 29 of the pick-up mechanism 27 has reached the predefined maximum safe degree of stretch.

Needless to say, the sizes of the sprockets, the sizes and strengths of the drive chains of such drive transmission systems for transmitting drive to the transfer rotor and to the pick-up drum of the pick-up mechanism would be appropriately selected to suit the loads to be transmitted therethrough, and the relevant gear ratios, and may be different to the sizes of the driving and driven sprockets 50, 52 and 54 and the main drive chain 53. In which case, appropriate calibration would be carried out and datum positions would be determined for the respective tensioning means, and suitable look-up tables would be prepared with angular displacements values of the respective tensioning means from the respective datum positions cross-referenced with degrees of stretch due to wear in the respective chains, and the look-up tables would be stored in the memory in the microcontroller 112.

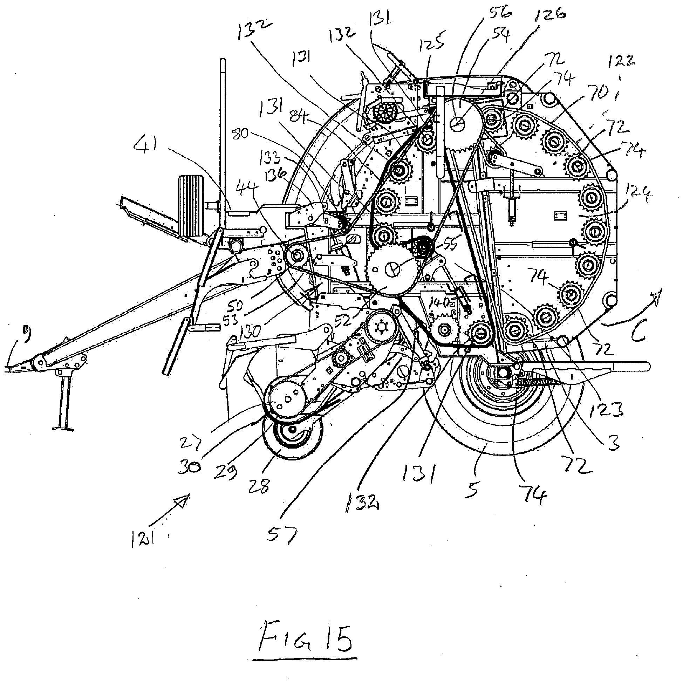

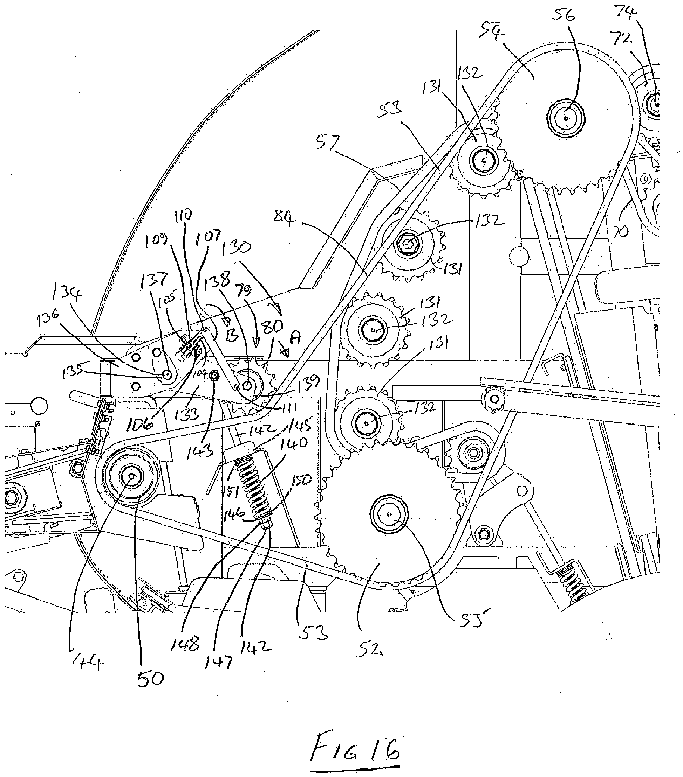

Referring now to Figs. 15 and 16, there is illustrated a fixed chamber baler also according to the invention and indicated generally by the reference numeral 121. The fixed chamber baler is substantially similar to the fixed chamber baler 2 of the combined bale wrapper 1, and similar components are identified by the same reference numerals. However, the baler 121 is not suitable for use in conjunction with a bale wrapper, and is of the type which is used separately from a bale wrapper. The main difference between the baler 121 and the baler 2 of the combined baler/bale wrapper 1 lies in the configuration of the bale chamber 122. The bale chamber 122 of the baler 121 does not include a tipping segment, and only includes a fixed segment 123 and a closure segment 124. The tipping segment 14 and the fixed segment 15 of the baler 2 are combined in the baler 121 to form the single fixed segment 123. The closure segment 124 is substantially similar to the closure segment 15 of the baler 2, with the exception that it is pivotally coupled to the fixed segment 123 adjacent an upper end 125 thereof about an upper pivot axis 126. The closure segment 124 is pivotal upwardly rearwardly about the upper pivot axis 126 in the direction of the arrow C from a closed bale forming state illustrated in Figs. 15 and 16 to an open state not illustrated for discharging a formed bale from the bale chamber 122. Such fixed chamber balers will be well known to those skilled in the art and further description should not be required.

Turning now to the driving of the bale rotating rollers 17, a drive transmission system 130 similar to the drive transmission system 49 of the baler 2 transmits drive from the first output shaft 44 of the gearbox 40. In this embodiment of the invention the drive transmission system 130 comprises a driving sprocket 50 fast on the first shaft 44 of the gearbox 40, first and second driven sprockets 52 and 54, and a main drive chain 53. The first driven sprocket 52 is mounted fast on a first transmission shaft 55 similar to the first transmission shaft 55 of the baler 2, see in particular Fig. 16. The second driven sprocket 54 is mounted fast on a second transmission shaft 56 similar to the second transmission shaft 56 of the baler 2. The main drive chain 53 is substantially similar to the main drive chain 53 of the baler 2 and extends around and cooperates with the driving sprocket 50 and the first and second driven sprockets 52 and 54 for transmitting drive from the driving sprocket 50 to the first and second driven sprockets 52 and 54.

A first chain drive transmission 57 comprising a first transmission sprocket (not shown) mounted fast on the first transmission shaft 55 transmits drive from the first transmission shaft 55 to sprockets 131 on shafts 132 of the bale rotating rollers 17a of the fixed segment 123.

In this embodiment of the invention the second chain drive transmission is not required, and a third chain drive transmission 70 comprising a third transmission sprocket (not shown) fast on the second transmission shaft 56 transmits drive from the second transmission shaft 56 to sprockets 72 on shafts 74 of the bale rotating rollers 17c of the closure segment 124.

A pivotally mounted tensioning unit 79 comprising a carrier arm 133, which is substantially similar to the carrier arm 83 of the baler 2 is mounted fast on a pair of pivot shafts 134 similar to the main pivot shafts 85 of the carrier arm 83 of the baler 2, which pivotally engage pivot bores 135 in respective spaced apart mounting plates 136, similar to the mounting plates 87 of the baler 2. The mounting plates 136 are rigidly secured to the chassis 3. The pivot shafts 134 define a main pivot axis 137 about which the carrier arm 133 is pivotal. A tensioning sprocket 80, similar to the tensioning sprocket 80 of the baler 2, is rotatably carried on a shaft 138 adjacent the distal end 139 of the carrier arm 133, and is engageable with the slack leg 84 of the main drive chain 53 for tensioning thereof.

An urging means, which in this embodiment of the invention comprises a compression spring 140 urges the carrier arm 133 about the main pivot axis 137 in the direction of the arrow A, for in turn urging the tensioning sprocket 80 into engagement with the slack leg 84 of the main drive chain 53. An elongated threaded adjusting rod 142 is pivotally coupled to the carrier arm 133 by a pivot pin 143 and extends from the carrier arm 133 and passes freely through a bore (not shown) in an anchor bracket 145 rigidly secured to the chassis 3 of the baler 121, and then through the compression spring 140 and through a bore (not shown) in an abutment plate 146 located adjacent a first end 150 of the compression spring 140. A pair of nuts 148 located on the threaded adjusting rod 142 adjacent a distal end 147 thereof, retains the compression spring 140 captive on the threaded adjusting rod 142 between the anchor bracket 145 and the abutment plate 146 with the first end 150 of the compression spring 140 abutting the abutment plate 146 and a second end 151 of the compression spring 140 abutting the anchor bracket 145. The force with which the tensioning sprocket 80 of the carrier arm 133 of the tensioning unit 79 is urged into engagement with the slack leg 84 of the main drive chain 53 is adjusted by urging the nuts 148, and in turn the abutment plate 146 along the threaded adjusting rod 142 for compressing or extending the compression spring 140.

An angle sensor 105, similar to the angle sensor 105 of the baler 2, is secured to the outer one of the mounting plates 136. A link member 107, similar to the link member 107 of the baler 2, couples the arm 104 of the angle sensor 105 to the carrier arm 133 in a similar manner as the link member 107 of the baler 2 couples the arm 104 of the angle sensor 105 to the carrier arm 83.

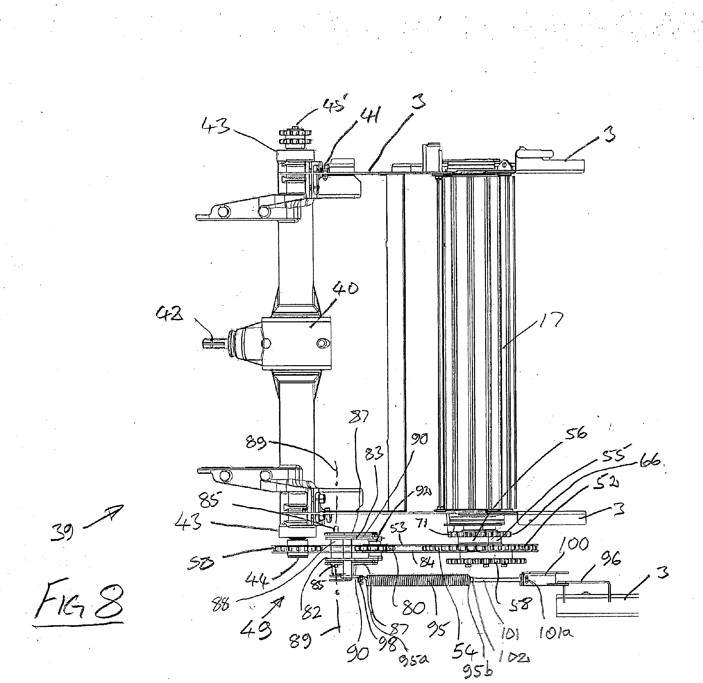

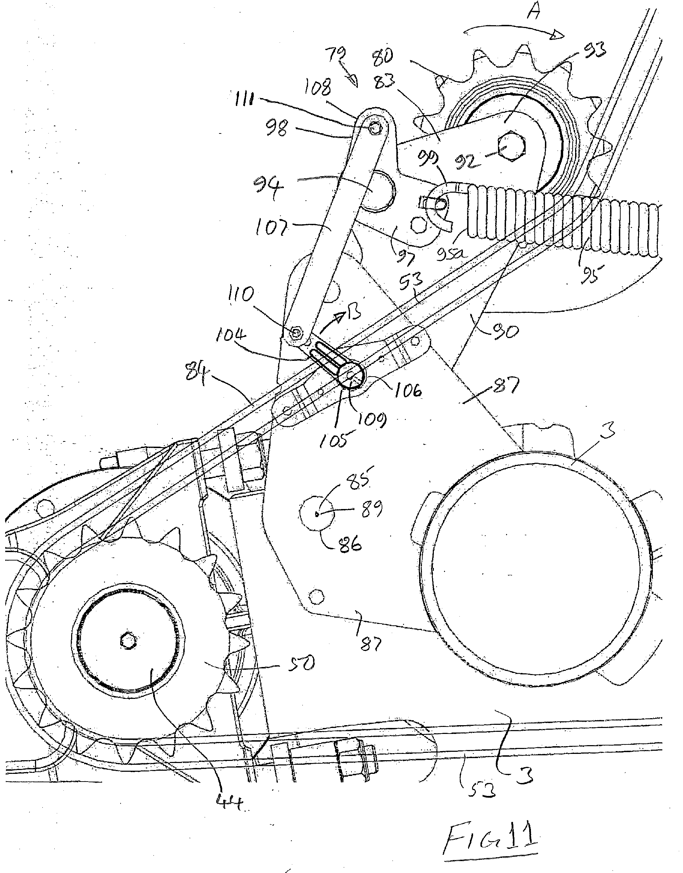

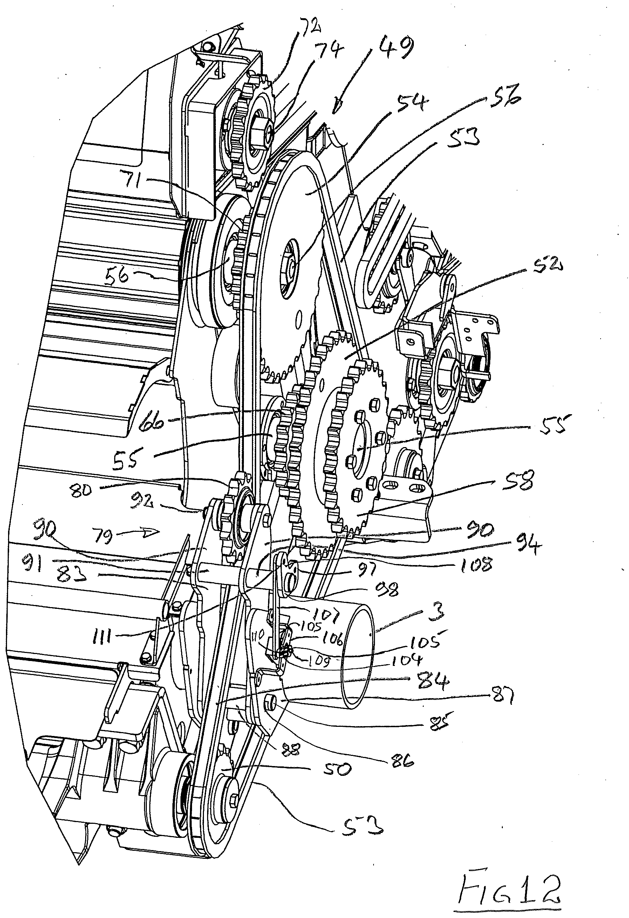

A microcontroller (not shown), similar to the microcontroller 112 of the baler 2, reads signals from the angle sensor 105 indicative of the angular displacement of the carrier arm 133 from its datum position, as already described with reference to the baler 2. The microcontroller (not shown) then determines the degree of stretching due to wear in the main drive chain 53 of the drive transmission system 49 from a look-up table (not shown) stored in the memory of the microcontroller in a similar manner as described with reference to the baler 2 of Figs. 1 to 14. However, in this embodiment of the invention the look-up table (not shown) is prepared using a standard baler similar to the baler 121 with the drive transmission system 130 provided with an unused new main drive chain. The standard baler is then operated during normal working conditions and at the end of predefined running time periods, the degree of stretch in the chain is measured and recorded against the read values of the signal produced by the angle sensor 105 as already described with reference to the preparation and storing of the look-up table 113 of the baler 2.

Otherwise, the baler 121 and its use is similar to that of the baler 2 of the combined baler/bale wrapper 1. Calibration of the baler 121 for determining the datum position of the carrier arm 133 is similar to that described with reference to the baler 2. Additionally, determining the predefined maximum safe degree of stretch in the main drive chain 53 is similar to that described with reference to the baler 2, in that a standard baler with an unused standard drive chain, similar to the main drive chain 53, is operated for a plurality of predefined running time periods, each of a suitable predefined number of running hours, until the standard drive chain breaks.

While the drive transmission system according to the invention has been described as comprising a chain drive transmission system, it is envisaged that the drive transmission system may be provided as a belt drive transmission system, in which case, the drive chain would be replaced by a drive belt, and the driving sprocket, the first and second driven sprockets 50, 52 and 54 would be replaced by suitable drive pulleys. Similarly, the tensioning sprocket would be replaced by a tensioning pulley. Indeed, in some embodiments of the invention it is envisaged that the tensioning means instead of comprising a tensioning sprocket or a tensioning pulley, may comprise a skid element which would engage the main drive chain or drive belt, as the case may be, of the drive transmission system with a skid type action.

It will also be appreciated that while it is advantageous to couple the angle sensor 105 to the carrier arm 83 through a link member, this is not essential, and in some embodiments of the invention the angle sensor may be pivotally connected directly to both the carrier arm and the anchor bracket or to any other suitable anchorage. It is also envisaged that in other embodiments of the invention where a link member or a linkage is used, the link member or linkage may connect the angle sensor to the anchor bracket, instead of to the carrier arm It is further envisaged that the angle sensor may be mounted directly and rigidly onto the carrier arm

While the balers have been described as comprising fixed chamber balers, the balers may be a belt baler, or a baler comprising a combination of bale rotating rollers and one or more belts defining the bale chamber.

Additionally, instead of storing a look-up table in the memory of the microcontroller with the signals read from the angle sensor tabulated against corresponding values of degrees of wear or stretch in the main drive chain or drive belt of the drive transmission system to enable subsequent determining of the degree of wear or stretch in the main drive chain or in the drive belt of the drive transmission system, it is envisaged that an equation representing the relationship between the degree of wear or stretch in the main drive chain or the drive belt of the drive transmission system and the signals read from the angle sensor may be determined and stored in the memory, for use in converting the signals read from the angle sensor to the degree of wear or stretch of the main drive chain or the drive belt of the drive transmission system. If the relationship between the degree of wear and the signals read from the angle sensor is linearly related, the equation would be in the form of

$$y = mx + c$$

On the otherhand, if the relationship between the degree of wear orstretch and the signals read from the angle sensor is not a linear relationship, the equation could be in the form of a power law equation, a polynomial equation or other appropriate equation.

Once the equation of the relationship has been determined and stored in the memory of the microcontroller, or other suitable signal processor, each time the degree of stretch of the main drive chain is to be determined, the microcontroller would be programmed to determine the degree of stretch of the chain by inserting the value of the signal read from the angle sensor into the stored equation.

While the monitoring means for monitoring the angular displacement of the tensioning means has been described as comprising a Hall effect angle sensor, any other angle sensing means may be provided, for example, an inclinometer, or any other suitable angle monitoring means. Indeed, in some embodiments of the invention the sensor for monitoring the angular displacement of the tensioning means may be provided by a linear distance sensor, in which case the microcontroller would be programmed to determine the angular displacement of the tensioning means from the datum position from the signal read from the linear distance sensor.

It is envisaged that a drive transmission system substantially similar to the drive transmission system 49 through which drive is transmitted from the first output shaft of the gearbox to the bale rotating rollers of the bale chamber may be provided in place of any chain drive transmission systems for transmitting drive to any other component of the baler or the bale wrapper.

While the urging means for urging the tensioning means into engagement with the one of the drive transmission chain and the drive transmission belt has been described as comprising a tension spring, in the case of the baler 2, and a compression spring in the case of the baler 121, any other suitable urging means may be provided, for example, a torsion spring, a compression spring, a pneumatic spring, a hydraulic spring or any other suitable urging means.

While the signal processor has been described as comprising a microcontroller, any other suitable signal processor may be provided. For example, the signal processor may be provided by a programmable logic controller, by a microprocessor, or by any other suitable signal processor.

**Claims**

1. A method for determining the degree of wear in a drive transmission system (49,130) of a baler (2, 121), the drive transmission system (49,130) comprising a rotatably mounted driving element (50) adapted to receive drive transmitted from a power source (40), a rotatably mounted driven element (52, 54) adapted to transmit drive to an operating part (17) of the baler (2, 121), an endless drive transmission element (53) cooperating with the driving element (50) and the driven element (52, 54) for transmitting drive from the driving element (50) to the driven element (52, 54), and a tensioning means (79, 80, 83,133) pivotally mounted about a pivot mounting (85,134) and urgeable into engagement with the endless drive transmission element (53) for tensioning thereof, **characterised in that** the method comprises monitoring a value of a characteristic indicative of the angular displacement of the tensioning means (79, 80, 83, 133) about the pivot mounting (85,134) from a datum position, and determining the degree of wear in the endless drive transmission element (53) as a function of the monitored value of the characteristic indicative of the angular displacement of the tensioning means (79, 80, 83, 133) about the pivot mounting (85,134) from the datum position.

2. A method as claimed in Claim 1 **characterised in that** the degree of wear in the endless drive transmission element (53) is determined from a look-up table (113) comprising a plurality of values of the characteristic indicative of the angular displacement of the tensioning means (79, 80, 83 133) from the datum position cross-referenced with corresponding values of the degree of wear in the endless drive transmission element (53) by selecting the value of the degree of wear in the endless drive transmission element (53) from the look-up table (113) which corresponds to or is closest to the monitored value of the characteristic indicative of the angular displacement of the tensioning means (79, 80, 83, 133) from the datum position in the look-up table (113) as the value of the degree of wear in the endless drive transmission element (53).

3. A method as claimed in Claim 2 **characterised in that** if the monitored value of the characteristic indicative of the angular displacement of the tensioning means (79, 80, 83, 133) from the datum position falls between two consecutive values of the characteristic indicative of the angular displacement of the tensioning means (79, 80, 83, 133) from the datum position in the look-up table (113), the value of the ratio of the monitored value of the characteristic indicative of the angular displacement of the tensioning means (79, 80, 83, 133) from the datum position to one of the lower value or the upper value of the two consecutive values of the characteristic indicative of the angular displacement of the tensioning means (79, 80, 83, 133) from the datum position in the look-up table (113) is determined and is applied to the value of the corresponding one of the lower value or uppervalue of the two consecutive values of the degree of wear of the endless drive transmission element (53) in the look-up table (113) corresponding to the two consecutive values of the characteristic indicative of the angular displacement of the tensioning means (79, 80, 83, 133) from the datum position in the look-up table (113) to determine the value of the degree of wear in the endless drive transmission element (53).

4. A method as claimed in Claim 1 **characterised in that** an equation indicative of the relationship between the characteristic indicative of the angular displacement of the tensioning means (79, 80, 83, 133) from the datum position and the degree of wear in the endless drive transmission element (53) is stored, and the value of the degree of wear in the endless drive transmission element (53) is determined by inserting the monitored value of the characteristic indicative of the angular displacement of the tensioning means (79, 80, 83, 133) from the datum position in the equation.

5. A method as claimed in any preceding claim **characterised in that** the tensioning means (79, 80, 83, 133) is urged into engagement with a slack leg (84) of the endless drive transmission element (53).

6. A method as claimed in any preceding claim **characterised in that** the tensioning means (79, 80, 83, 133) is resiliently urged into engagement with the endless drive transmission element (53).

7. A baler comprising a drive transmission system (49,130) adapted to transmit drive from a power source (40) to an operating part (17) of the baler (2, 121), the drive transmission system (49,130) comprising a rotatably mounted driving element (50) adapted to receive drive from the power source (40), a rotatably mounted driven element (52, 54) adapted to transmit drive to the operating part (17) of the baler (2,121), an endless drive transmission element (53) cooperable with the driving element (50) and the driven element (52, 54) for transmitting drive from the driving element (50) to the driven element (52, 54), and a tensioning means (79, 80, 83,133) pivotally mounted about a pivot mounting (85,134) and urgeable into engagement with the endless drive transmission element (53) for tensioning thereof, **characterised in that** a monitoring means (105) is provided for monitoring a value of a characteristic indicative of the angular displacement of the tensioning means (79, 80, 83,133) about the pivot mounting (85,134) from a datum position and to produce a signal indicative of the characteristic indicative of the angular displacement of the tensioning means (79, 80, 83, 133) about the pivot mounting (85,134) from the datum position, and a signal processor (112) is provided to determine the wear in the endless drive transmission element (53) as a function of the value of the signal produced by the monitoring means (105) indicative of the characteristic indicative of the angular displacement of the tensioning means (79, 80, 83, 133) about the pivot mounting (85, 134) from the datum position.

8. A baler as claimed in Claim 7 **characterised in that** the monitoring means (105) for monitoring the characteristic indicative of the angular displacement of the tensioning means (79, 80, 83, 133) about the pivot mounting (85,134) from the datum position comprises an angle monitoring sensor (105).

9. A baler as claimed in Claim 7 or 8 **characterised in that** the tensioning means (79, 80, 83, 133) is engageable with a slack leg (84) of the endless drive transmission element (53).

10. A baler as claimed in any of Claims 7 to 9 **characterised in that** the tensioning means (79, 80, 83, 133) is resiliently urged into engagement with the endless drive transmission element (53) by a resilient urging means (95,140).

11. A baler as claimed in any of Claims 7 to 10 **characterised in that** the rotatably mounted driving element (50) comprises one of a driving sprocket or a driving pulley, the rotatably mounted driven element (52, 54) comprises a corresponding one of a driven sprocket or a driven pulley, and the endless drive transmission element (53) comprises a corresponding one of a drive chain or a drive belt.

12. A baler as claimed in any of Claims 7 to 11 **characterised in that** the tensioning means (79, 80, 83, 133) comprises one of a tensioning sprocket or a tensioning pulley engageable with a corresponding one of the drive chain or the drive belt of the drive transmission system (49).

13. A baler as claimed in any of Claims 7 to 12 **characterised in that** a look-up table (113) is stored in the memory (114) of the signal processor (112), the look-up table (113) comprising a plurality of values of the signal produced by the monitoring means indicative of the characteristic indicative of the angular displacement of the tensioning means (79, 80, 83, 133) from the datum position cross-referenced with corresponding values of the degree of wear in the endless drive transmission element (53), and the signal processor (112) is programmed to determine the degree of wear in the endless drive transmission element (53) by comparing the monitored value of the signal produced by the monitoring means (105) with the values of the signal stored in the look-up table (113), and selecting the value of the degree of wear in the endless drive transmission element (53) from the look-up table (113) corresponding to or closest to the monitored value of the signal produced by the monitoring means (105) as the value of the degree of wear in the endless drive transmission element (53).

14. A baler as claimed in Claim 13 **characterised in that** if the monitored value of the signal produced by the monitoring means falls between two consecutive values of the signal stored in the look-up table (113), the signal processor (112) is programmed to determine a value of a ratio of the monitored value of the signal produced by the monitoring means (105) to one of the lower value or the upper value of the two consecutive values of the signal stored in the look-up table (113), and to apply the determined value of the ratio to the corresponding one of the lower value or upper value of the two consecutive values of the degree of wear in the endless drive transmission element (53) in the look-up table (113) corresponding to the two consecutive values of the signal in the look-up table (113) to determine the degree of wear in the endless drive transmission element (53).

15. A baler as claimed in any of Claims 7 to 14 **characterised in that** the baler comprises a fixed chamber baler or a belt baler.

FIG 1

FIG 2

FIG 3

FIG 4

FIG 5

FIG 6

FIG 7

Fig. 8

Fig 9

Fig. 10

FIG 11

FiG12

EP 4 388 863 A1

105

Angle Sensor

112

Microcontroller | memory

114

116

Alert Signal

Sounder

118

Visual display Screen

warning light

119

Visual Display Unit

115a

115

FIG 13

Look-up Table

| Column 1 | Column 2 |
|---|---|
| Angle sensor Value | Degree of stretch |
| $A_0$ | $S_0$ |
| $A_1$ | $S_1$ |
| $A_2$ | $S_2$ |
| $A_3$ | $S_3$ |
| $A_4$ | $S_4$ |
| $A_5$ | $S_5$ |
| $A_6$ | $S_6$ |
| $A_7$ | $S_7$ |
| $A_8$ | $S_8$ |
| $A_9$ | $S_9$ |

113

FIG 14

FIG 15

FIG 16

Europäisches
Patentamt

European
Patent Office

Office européen
des brevets

# EUROPEAN SEARCH REPORT

Application Number

EP 23 21 8819

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/346324 A1 (CASADEI VALERIO [IT] ET AL) 3 November 2022 (2022-11-03) <br> * figures 4A, 6, 9 * <br> * paragraphs [0024], [0029], [0033], [0034], [0072], [0083] * <br> * claim 29 * | 1-15 | INV. <br> A01F15/07 <br> A01F15/08 <br> F16H7/08 <br> F16H61/12 |
| A | CA 1 223 146 A (SPERRY CORP) 23 June 1987 (1987-06-23) <br> * figures 1, 2 * <br> * paragraph [0004] * | 11,15 | |
| A | EP 1 877 684 B1 (DAYCO PRODUCTS LLC [US]) 18 August 2010 (2010-08-18) <br> * figures 2, 4, 6, 8 * <br> * paragraphs [0008], [0015], [0016] * | 1-15 | |
| A | US 2005/124447 A1 (MESSAGE OLIVIER [FR] ET AL) 9 June 2005 (2005-06-09) <br> * figures 5, 6 * <br> * paragraphs [0008] - [0011], [0045] - [0048] * | 1-15 | |

TECHNICAL FIELDS
SEARCHED        (IPC)

A01F
F16H

The present search report has been drawn up for all claims

| Place of search | Date of completion of the search | Examiner |
|---|---|---|
| Munich | 23 April 2024 | Rahbauer, Sebastian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 21 8819

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2024

| Patent document cited in search report | | | Publication date | Patent family member(s) | | | Publication date |
|---|---|---|---|---|---|---|---|
| US 2022346324 | A1 | | 03-11-2022 | AU | 2021210223 | A1 | 02-12-2021 |
| | | | | CA | 3141038 | A1 | 29-07-2021 |
| | | | | EP | 4093180 | A1 | 30-11-2022 |
| | | | | IT | 202000000928 | A1 | 20-07-2021 |
| | | | | US | 2022346324 | A1 | 03-11-2022 |
| | | | | WO | 2021148946 | A1 | 29-07-2021 |
| CA 1223146 | A | | 23-06-1987 | AU | 563632 | B2 | 16-07-1987 |
| | | | | CA | 1223146 | A | 23-06-1987 |
| | | | | EP | 0121280 | A2 | 10-10-1984 |
| EP 1877684 | B1 | | 18-08-2010 | AU | 2006240253 | A1 | 02-11-2006 |
| | | | | BR | PI0610538 | A2 | 29-06-2010 |
| | | | | CA | 2605627 | A1 | 02-11-2006 |
| | | | | CN | 101189450 | A | 28-05-2008 |
| | | | | EP | 1877684 | A2 | 16-01-2008 |
| | | | | ES | 2350747 | T3 | 26-01-2011 |
| | | | | JP | 4971308 | B2 | 11-07-2012 |
| | | | | JP | 2008537084 | A | 11-09-2008 |
| | | | | KR | 20070120186 | A | 21-12-2007 |
| | | | | US | 2006240922 | A1 | 26-10-2006 |
| | | | | WO | 2006115840 | A2 | 02-11-2006 |
| US 2005124447 | A1 | | 09-06-2005 | AT | E306627 | T1 | 15-10-2005 |
| | | | | DE | 60206648 | T2 | 06-07-2006 |
| | | | | EP | 1444452 | A1 | 11-08-2004 |
| | | | | FR | 2832201 | A1 | 16-05-2003 |
| | | | | JP | 4298508 | B2 | 22-07-2009 |
| | | | | JP | 2005509811 | A | 14-04-2005 |
| | | | | US | 2005124447 | A1 | 09-06-2005 |
| | | | | WO | 03042577 | A1 | 22-05-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2002076183 A